# FASCICULE DE BREVET EUROPEEN

(11) **EP 2 871 876 B1**
(45) Date de publication et mention de la délivrance du brevet: **23.09.2020**
(21) Numéro de dépôt: 14192159.3
(22) Date de dépôt: 06.11.2014
(51) Int. Cl.: H04W 12/04, H04W 12/00, H04W 84/12

(54) **Technique de configuration d'accès sécurisé d'un terminal invité à un réseau hôte**
Technik zum Konfigurieren eines gesicherten Zugangs eines eingeladenen Endgeräts zu einem Gast-Netzwerk
Technique for configuring secure access by a guest terminal to a host network

(30) Priorité: 12.11.2013 FR 1361033
(43) Date de publication de la demande: 13.05.2015
(73) Titulaire: ORANGE, 75015 Paris (FR)
(72) Inventeur: Radier, Benoît, 22700 Perros Guirec (FR); Nicaisse, M. Sébastien, 92130 Issy Les Moulineaux (FR)

(56) Documents cités:
- EP-A2- 1 191 763
- EP-A2- 2 337 388
- US-A1- 2008 195 741
- US-A1- 2012 266 217
- "Chapter 3 Wireless Security Settings", , 1 août 2006 (2006-08-01), XP055133887, Extrait de l'Internet: URL:http://documentation.netgear.com/wn802 t/enu/202-10204-01/pdfs/Wireless.pdf [extrait le 2014-08-08]

## Description

L'invention se situe dans le domaine du contrôle d'accès à un réseau de communication privé sans fil, et concerne, plus particulièrement, un procédé de configuration à distance d'un accès sécurisé à un tel réseau pour un terminal invité.

Par la suite, un réseau privé désigne un réseau non public dont l'accès n'est ouvert qu'à certains utilisateurs. Cet accès est par exemple restreint par des informations de configuration qu'un utilisateur doit disposer pour d'une part identifier le réseau et pour d'autre part être autorisé à accéder au réseau. Il peut s'agir par exemple de paramètres d'authentification comprenant un identifiant du réseau, tel qu'un identifiant « SSID » (pour « *Service Set Identifier* »), associé à une clé d'accès réseau (e.g. clé WEP pour « *Wired Equivalent Privacy* », clé WPA pour « *Wi-Fi Protected Access »).*

Lorsqu'un utilisateur disposant de droits d'administration d'un réseau privé, souhaite offrir de partager un accès à ce réseau, dit « réseau hôte », à un autre utilisateur, une solution simple consiste à communiquer explicitement à ce dernier les informations de configuration en permettant l'accès. Il est alors possible à un utilisateur se voyant offrir un tel partage d'accès, ou « utilisateur invité », de configurer manuellement son terminal, appelé par la suite « terminal invité ».

Cette solution présente néanmoins un risque sécuritaire dû notamment à la transmission de données sensibles à l'utilisateur invité par l'utilisateur qui offre un partage d'accès au réseau hôte, ou « utilisateur hôte ». Elle nécessite en outre une étape de saisie des informations de configuration par l'utilisateur invité, particulièrement sujette à source d'erreurs dans la mesure où cela implique généralement de renseigner des champs avec des chaînes de caractères alphanumériques longues et difficiles à mémoriser.

Le document US 2008/0195741 présente une méthode pour fournir un accès par l'intermédiaire d'un réseau sans fil à un réseau personnel.

Le document US 2012/0266217 décrit une méthode pour permettre un accès à un réseau hôte en partageant des paramètres d'accès au réseau hôte entre deux modules exécutés respectivement sur un terminal hôte et un terminal invité.

Le document XPO55133887 Chapter 3 Wireless Security Settings- 1 août 2006 (2006-08-01)) est un manuel de configuration manuelle d'un réseau local sans fil. Il concerne plus particulièrement la configuration de paramètres d'accès à un réseau local.

Le document EP 1191763 A2 décrit un système d'authentification d'accès d'un utilisateur, abonné à un opérateur mobile, à un réseau sans fil (WLAN) géré par un deuxième opérateur.

La demande de brevet européen publiée le 22 juin 2011 sous la référence EP 2337388 A2 décrit un procédé permettant à un terminal invité déjà configuré pour accéder à un réseau visiteur via une passerelle visiteur, d'accéder à un réseau hôte via une passerelle hôte avec les identifiant et clé d'accès réseau lui permettant d'accéder au réseau visiteur. Plus précisément, la passerelle hôte mémorise un identifiant unique pour chaque utilisateur invité renseigné par un utilisateur hôte ayant des droits d'administration sur le réseau hôte. La passerelle hôte joint ensuite une base de données d'utilisateurs afin d'obtenir une adresse de la passerelle visiteur. Puis elle envoie une requête pour obtenir les paramètres d'authentification permettant l'accès du terminal invité auprès de la passerelle visiteur. Dans le cas où cette dernière mémorise un identifiant unique de l'utilisateur hôte, elle retourne les paramètres demandés à la passerelle hôte. La passerelle hôte crée alors un accès avec les paramètres d'authentification de la passerelle visiteur. L'utilisateur invité s'authentifie auprès de la passerelle hôte via l'accès créé avec les paramètres d'authentification de la passerelle visiteur.

Cette solution présente certains inconvénients. Elle ne permet notamment pas d'offrir un accès à un terminal utilisateur qui ne serait pas au préalable déjà configuré pour accéder à un autre réseau. En outre elle nécessite l'envoi par l'utilisateur invité de ses paramètres d'authentification à l'utilisateur hôte, ce qui peut présenter une faille de sécurité importante dans le cas d'un utilisateur hôte malveillant, ou d'un utilisateur usurpant l'identité de l'utilisateur hôte.

Un des buts de l'invention est de remédier à des insuffisances/inconvénients de l'état de la technique et/ou d'y apporter des améliorations.

Selon un premier aspect l'invention concerne un procédé de configuration d'accès à un réseau, dit réseau hôte, pour permettre à au moins un terminal associé à un utilisateur invité, dit terminal invité, d'accéder au réseau hôte, le procédé étant mis en œuvre par un premier module de gestion d'accès réseaux associé à l'utilisateur hôte, et comprenant les étapes suivantes :
- réception depuis un terminal associé à l'utilisateur hôte, d'une offre de partage d'accès au réseau hôte destinée à l'utilisateur invité, les utilisateurs hôte et invité étant en relation par l'intermédiaire d'un réseau social ;
- obtention auprès d'un deuxième module de gestion d'accès réseaux associé à l'utilisateur invité, d'informations d'identification du terminal invité ;
- obtention auprès du réseau hôte d'informations de configuration permettant l'accès au réseau hôte par le terminal invité, suite à l'envoi au réseau hôte d'une requête de configuration d'accès comprenant les informations d'identification ; et
- envoi au deuxième module de gestion des informations de configuration, destinées à être transmises au terminal invité pour lui permettre d'accéder au réseau hôte.

Le procédé de configuration permet à un utilisateur hôte de partager l'accès à un réseau hôte uniquement avec des utilisateurs expressément autorisés par ce dernier à accéder au réseau. L'utilisateur hôte étant par ailleurs en relation avec l'utilisateur invité par l'intermédiaire d'un réseau social, un lien de confiance préexiste entre les deux utilisateurs. Un tel lien permet notamment à l'utilisateur hôte d'offrir l'accès au réseau hôte uniquement à des utilisateurs réputés de confiance.

Il est également à remarquer qu'il n'est pas nécessaire pour l'utilisateur invité de disposer d'un terminal préalablement configuré pour accéder à un autre réseau pour pouvoir accéder au réseau hôte. En particulier, dans le cas par exemple d'un accès Wi-Fi au réseau hôte, lorsque l'utilisateur invité utilise un terminal disposant d'une interface radio Wi-Fi, aucun abonnement auprès d'un opérateur de télécommunication n'est exigé pour l'accès au réseau hôte. Le procédé ne faisant pas appel à des données utilisateurs obtenues d'un opérateur de télécommunication, il est ouvert à tout terminal invité associé à l'utilisateur invité, que ce dernier soit abonné auprès d'un opérateur de télécommunication ou non.

Plus précisément le procédé permet de fournir les informations de configuration nécessaire à la configuration du terminal d'un utilisateur invité pour accéder au réseau hôte. Ces informations étant échangées par l'intermédiaire d'un premier module de gestion d'accès réseaux et d'un deuxième module de gestion d'accès réseaux respectivement associés à l'utilisateur hôte et à l'utilisateur invité, les saisies et risques d'erreurs qui les accompagnent sont minimisées tant pour l'utilisateur hôte que pour l'utilisateur invité. De même les informations d'identification de l'utilisateur invité sont directement obtenues du réseau social, ce qui tout en minimisant les risques d'erreurs comme pour les informations de configuration, en facilite également l'accès. De plus le recours à un réseau social permet d'offrir un accès au réseau hôte à des utilisateurs invités non seulement distants géographiquement de l'utilisateur hôte, mais également distant du réseau hôte lui-même. L'utilisateur hôte lui-même n'a pas besoin de se trouver à proximité du réseau hôte pour en offrir l'accès.

Les informations du terminal invité (e.g. adresse MAC pour *Media Access Control,* IMEI pour *International Mobile Equipment Identity*) étant obtenues depuis le deuxième module de gestion d'accès réseaux, il n'est pas nécessaire pour l'utilisateur hôte de les saisir, ce qui permet à un utilisateur hôte de configurer un partage d'accès au réseau hôte simplement. Les erreurs de saisies sont également éliminées. En outre, la prise en compte des informations d'identification du terminal invité obtenues permettent au premier module de gestion de réaliser un contrôle d'accès renforcé. Un accès au réseau hôte d'un terminal utilisateur ayant récupéré des paramètres d'authentification auprès d'un terminal invité autorisé à accéder au réseau hôte ne peut par exemple pas aboutir si le terminal utilisateur n'est pas connu du premier module de gestion.

Il convient par ailleurs de noter qu'un contrôle d'accès à un réseau reposant uniquement sur des clés d'accès réseau telles qu'une clé WEP ou WAP ne permet plus aujourd'hui de garantir à lui seul un accès sécurisé. Selon les techniques récentes de l'état de l'art en matière de décryptage, ces clés peuvent en effet être décryptées en quelques secondes. Un contrôle d'accès prenant en compte un identifiant du terminal invité permet donc de renforcer la sécurité relative à l'accès au réseau hôte.

En outre l'accès étant offert par l'utilisateur hôte, seul le premier module de gestion envoie des informations de configuration. De ce fait aucun envoi de données sensibles (e.g. clés pour s'authentifier sur un autre réseau) n'est demandé à l'utilisateur invité.

Selon une caractéristique particulière le procédé de configuration d'accès comprend en outre préalablement à l'étape d'obtention d'informations d'identification, une étape d'obtention par l'intermédiaire du réseau social d'une adresse du deuxième module de gestion, cette adresse étant utilisée lors de l'obtention des informations d'identification auprès du deuxième module de gestion.

L'adresse du deuxième module de gestion étant obtenue par l'intermédiaire du réseau social, une évolution de la relation (e.g. rupture du lien existant entre les utilisateurs hôte et invité à l'initiative de l'un ou l'autre des deux utilisateurs) entre l'utilisateur hôte et l'utilisateur invité est automatiquement prise en compte pour le partage d'accès au réseau hôte. Dans le cas par exemple où les utilisateurs hôte et invité ne seraient plus en relation par l'intermédiaire du réseau social, ce dernier n'est plus en mesure de fournir une adresse du deuxième module de gestion au premier module de gestion. La configuration d'un partage d'accès au réseau hôte est alors soit impossible, soit mise à jour afin de ne plus autoriser l'accès au réseau hôte à un utilisateur invité n'étant plus en relation avec l'utilisateur hôte lorsqu'une configuration pour cet utilisateur existait déjà.

Selon une caractéristique particulière, les informations de configuration envoyées au deuxième module de gestion comprennent des paramètres d'authentification pour l'accès au réseau.

Selon une caractéristique particulière, les paramètres d'authentification sont spécifiques au terminal invité, le procédé comprenant en outre préalablement à l'étape d'envoi au réseau hôte, une étape de génération des paramètres d'authentification par le premier module de gestion d'accès réseaux.

La génération de paramètres d'authentification associés au terminal invité permet à l'utilisateur hôte de choisir un niveau de sécurité applicable pour le terminal invité. Ce niveau de sécurité varie par exemple en fonction du niveau de confiance que l'utilisateur hôte accorde à l'utilisateur invité, ou encore en fonction de caractéristiques du terminal invité utilisé par l'utilisateur invité. Si l'utilisateur invité est réputé de grande confiance il n'est par exemple pas nécessaire de mettre en œuvre une authentification forte susceptible de ralentir le temps d'attachement au réseau hôte du terminal invité. Les paramètres d'authentification peuvent également être choisis en fonction de leur compatibilité avec les protocoles d'authentification à disposition du terminal invité.

En outre, la création de paramètres d'authentification associés au terminal invité permet d'offrir à ce terminal un accès personnalisé au réseau hôte. Cet accès personnalisé consiste par exemple en la création d'un couple identifiant / clé d'accès réseau propre au terminal invité ou à l'utilisateur invité. A cet effet un paramétrage permettant de créer simultanément plusieurs accès au réseau hôte à partir d'un même point d'accès peut avantageusement être utilisé. Ce paramétrage peut par exemple proposer un identifiant de réseau SSID distinct pour chaque terminal invité autorisé à accéder au réseau (il s'agit par exemple d'un paramétrage dit «multi-SSID»). Il n'est alors pas nécessaire pour le premier module de gestion de communiquer les paramètres d'authentification utilisés par l'utilisateur hôte pour accéder au réseau hôte. De même l'utilisateur invité ne transmet pas à l'utilisateur hôte de paramètres d'authentification provenant d'une configuration d'accès à un autre réseau auquel l'un de ses terminaux est autorisé à accéder.

Un accès propre à un terminal invité offre également plus de souplesse dans la configuration d'accès au réseau hôte. Un accès offert à l'utilisateur invité peut par exemple être supprimé ou mis à jour sans impacts sur la configuration d'accès au réseau hôte de l'utilisateur hôte ou d'autres utilisateurs invités.

L'accès au réseau hôte peut également être personnalisé en fonction du terminal invité, ou d'un type de terminal invité à l'aide de différents attributs définis par l'utilisateur hôte (e.g. temps de connexion offert, bande passante offerte). Cette différenciation des accès par terminal invité permet en outre d'obtenir simplement des statistiques d'usage du réseau hôte ventilées par terminal invité.

Selon une caractéristique particulière, le procédé de configuration d'accès comprend en outre préalablement à l'étape de réception, une étape d'obtention par l'intermédiaire du réseau social d'une liste d'utilisateurs invités, les étapes du procédé étant réitérées pour chaque utilisateur invité de la liste.

L'étape d'obtention d'une liste d'utilisateurs invités permet davantage de souplesse quant à la configuration d'accès au réseau hôte. L'utilisateur hôte peut notamment profiter des avantages offerts par le réseau social pour construire ou obtenir une liste d'utilisateurs invités : notamment sélection des utilisateurs invités aisée et obtention des utilisateurs invités par simple authentification auprès du réseau social.

Selon une caractéristique particulière, le procédé de configuration d'accès comprend en outre une étape de mise à jour des informations de configuration permettant l'accès au réseau hôte par le terminal invité.

Les avantages énoncés pour le procédé de configuration d'accès selon l'une quelconque des caractéristiques du premier aspect sont directement transposables au procédé de configuration d'accès selon le deuxième aspect.

Selon un deuxième aspect, l'invention a pour objet un procédé de configuration d'accès à un réseau, dit réseau hôte, pour permettre à un terminal associé à un utilisateur invité, dit terminal invité, d'accéder au réseau hôte, le procédé étant mis en œuvre par un premier module de gestion d'accès réseaux associé à l'utilisateur invité, et comprenant les étapes suivantes :
- fourniture d'informations d'identification du terminal invité à un deuxième module de gestion d'accès réseaux associé au réseau hôte, en réponse à une demande d'informations d'identification du terminal invité reçue du deuxième module ;
- réception depuis un terminal associé à l'utilisateur hôte, par l'intermédiaire d'un réseau social, d'une offre de partage d'accès au réseau hôte destinée à l'utilisateur invité, les utilisateurs hôte et invité étant en relation par l'intermédiaire du réseau social ;
- réception d'une requête d'accès au réseau hôte depuis le terminal invité ; et
- envoi au terminal invité d'informations de configuration obtenues auprès du deuxième module de gestion, les informations de configuration comprenant une configuration d'accès permettant au terminal invité d'accéder au réseau hôte, obtenue par le deuxième module de gestion au moyen des informations d'identification du terminal invité.

Selon une caractéristique particulière, la fourniture des informations d'identification est réalisée après réception d'un message de sélection du terminal invité par l'utilisateur invité.

La sélection du terminal permet à l'utilisateur invité de choisir les terminaux pour lesquels il souhaite que l'utilisateur hôte autorise un accès. L'utilisateur invité est également assuré que ces informations ne seront pas récupérées par un utilisateur hôte ou un tiers à qui il ne souhaite pas les communiquer. Le procédé permet en particulier d'éviter une configuration d'accès au réseau hôte pour des terminaux dont la probabilité d'accéder au réseau est très faible.

Selon une caractéristique particulière, le procédé de configuration d'accès comprend en outre préalablement à l'étape de réception de la requête d'accès, une étape d'obtention auprès du terminal invité d'un accord de l'utilisateur invité à l'offre de partage d'accès reçue de l'utilisateur hôte.

L'obtention d'un accord à l'offre de partage d'accès au réseau hôte permet au premier module de gestion de ne pas solliciter une configuration d'accès pour des terminaux dont la probabilité d'accéder au réseau hôte est très faible. Il peut s'agir par exemple de terminaux disposant d'interfaces radio pour accéder à un réseau mais très peu susceptibles d'être déplacés et donc de se trouver à portée du réseau hôte (e.g. téléviseur, appareil électro-ménager). Une configuration d'accès au réseau hôte pour de tels terminaux est ainsi évitée. Le procédé permet également de ne pas imposer à un utilisateur invité une configuration d'accès non souhaitée au réseau hôte en lui laissant la possibilité de refuser l'accord.

Selon un troisième aspect, l'invention concerne un module de gestion d'accès réseaux agencé pour autoriser un accès à un réseau hôte à au moins un terminal invité associé à un utilisateur invité, le module étant associé à un utilisateur hôte, comprenant :
- un premier sous-module de communication agencé pour communiquer avec un réseau social, les utilisateurs étant en relation par l'intermédiaire du réseau social ;
- un premier sous-module de réception agencé pour recevoir depuis un terminal associé à un utilisateur hôte une offre de partage d'accès au réseau hôte destinée à l'utilisateur invité ;
- un premier sous-module d'envoi agencé pour envoyer à un deuxième module de gestion d'accès réseaux associé à l'utilisateur invité, une demande d'informations d'identification du terminal invité, et pour envoyer au deuxième module de gestion des informations de configuration destinées au terminal invité identifié, les informations de configuration permettant l'accès au réseau hôte ;
- un deuxième sous-module de réception agencé pour recevoir d'un deuxième module de gestion d'accès réseaux associé à l'utilisateur invité, des informations d'identification du terminal invité ;
- un deuxième sous-module d'envoi agencé pour envoyer au réseau hôte une requête de configuration d'accès, la configuration une fois effectuée permettant d'autoriser un accès au réseau hôte au terminal invité identifié.

Selon un quatrième aspect, l'invention concerne un module de gestion d'accès réseaux agencé pour autoriser un accès à un réseau hôte à au moins un terminal invité associé à un utilisateur invité, le module étant associé à un utilisateur invité, comprenant :
- un premier sous-module de communication agencé pour communiquer avec un réseau social, notamment agencé pour recevoir depuis le réseau social, une offre de partage d'accès au réseau hôte destinée à l'utilisateur invité, les utilisateurs étant en relation par l'intermédiaire du réseau social ;
- un premier sous-module d'envoi/réception agencé pour recevoir depuis le terminal invité une requête d'accès au réseau hôte, et envoyer des informations de configuration au terminal invité ;
- un deuxième sous-module d'envoi/réception agencé pour recevoir depuis un deuxième module de gestion d'accès réseaux associé à l'utilisateur hôte une demande d'identification du terminal invité, envoyer au deuxième module des informations d'identification du terminal invité, et recevoir des informations de configuration comprenant une configuration d'accès permettant l'accès du terminal invité au réseau hôte, le terminal invité ayant préalablement été identifié par le deuxième module de gestion via les informations d'identification envoyées.

Selon un cinquième aspect, l'invention a pour objet un système de configuration d'accès à un réseau hôte, le système comprenant :
- un module de gestion d'accès réseaux selon le troisième aspect ;
- un module de gestion d'accès réseaux selon le quatrième aspect ;
- un réseau social.

Selon un sixième aspect, l'invention concerne également un programme pour un module de gestion d'accès réseaux, comprenant des instructions de code de programme destinées à commander l'exécution des étapes du procédé de configuration d'accès à un réseau hôte précédemment décrit, lorsque ledit programme est exécuté par ledit module et un support d'enregistrement lisible par un module sur lequel est enregistré un programme pour un module.

L'invention sera mieux comprise à l'aide de la description suivante de modes de réalisation particuliers, en référence aux dessins annexés sur lesquels :
- la figure 1 représente un système de configuration d'accès à un réseau hôte ;
- la figure 2 représente des étapes d'un procédé de configuration d'accès à un réseau hôte dans un mode particulier de réalisation.
- la figure 3 représente un module de gestion d'accès réseaux associé à un utilisateur hôte mettant en œuvre un procédé de configuration d'accès à un réseau hôte selon un mode particulier de réalisation ;
- le figure 4 représente un module de gestion d'accès réseaux associé à un utilisateur invité mettant en œuvre un procédé de configuration d'accès à un réseau hôte selon un mode particulier de réalisation ;

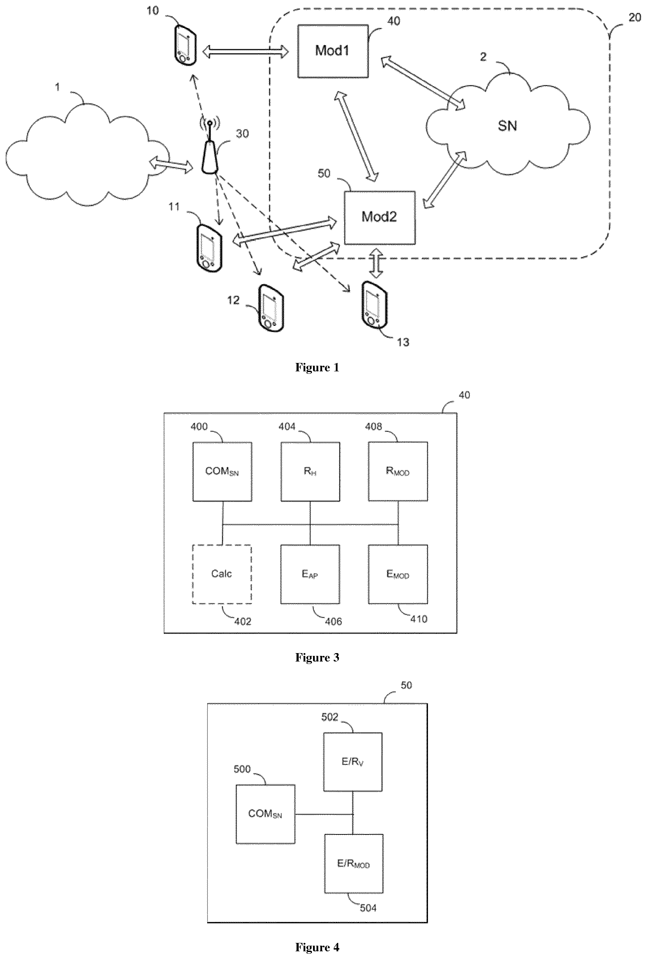

La **figure 1** représente un système 20 pour configurer un accès à un réseau hôte 1 pour des terminaux invités 11-13. Le réseau 1 est par exemple un réseau d'opérateur de télécommunications. Un point d'accès 30 permet d'accéder au réseau 1.

Le système 20 comprend un premier module de gestion d'accès réseaux 40 associé à un utilisateur hôte, un deuxième module de gestion d'accès réseaux 50 associé à un utilisateur invité et un réseau social 2. Le réseau social est par exemple un réseau tel que ceux connus sous les désignations commerciales Facebook ®, Linkedin ® ou Viadeo ®. Les premier et deuxième modules de gestion d'accès réseaux 40, 50, communiquent entre eux, et communiquent également avec le réseau social 2.

Un terminal associé à l'utilisateur hôte, le terminal hôte 10, communique avec le premier module de gestion d'accès réseaux 40. Un seul terminal hôte 10 est représenté, il n'existe cependant pas de limitation au nombre de terminaux hôtes pouvant être en relation avec le premier module de gestion d'accès réseau 40.

De même, des terminaux invités 11-13 associés à l'utilisateur invité communiquent avec le deuxième module de gestion d'accès réseaux 50. Aucune limitation n'est attachée au nombre de terminaux invités 11-13 associés à l'utilisateur invité.

Les terminaux 10-13 sont par exemple un ordinateur personnel, un terminal mobile ou encore une tablette disposant d'une interface radio.

Les premier et deuxième modules de gestion d'accès réseaux 40, 50, sont représentés distincts des terminaux 10-13 et du réseau social 2. Dans un autre mode de réalisation, les premier et deuxième modules sont respectivement intégrés à un terminal 10 associé à l'utilisateur hôte et à un terminal invité 11-13 associé à l'utilisateur invité. Dans encore un autre mode de réalisation, les modules 40, 50, sont des éléments du réseau social 2 respectivement associé à un compte utilisateur de l'utilisateur hôte et à un compte utilisateur de l'utilisateur invité.

Dans le mode de réalisation représenté, l'utilisateur hôte envoie à l'aide de son terminal hôte 10 une offre de partage d'accès au réseau hôte 1, par l'intermédiaire du premier module de gestion d'accès réseau 40, à destination d'un utilisateur invité avec lequel il est en relation via le réseau social 2. L'utilisateur invité est informé de l'offre envoyée par l'utilisateur hôte lorsqu'il s'authentifie avec l'un de ses terminaux invités 11-13 sur le réseau social 2, ce dernier lui relayant l'offre de partage d'accès par l'intermédiaire du deuxième module de gestion d'accès réseaux 50. Les premier et deuxième modules de gestion d'accès réseaux 40, 50, échangent ensuite ensemble afin d'autoriser un accès au réseau hôte 1 par l'intermédiaire du point d'accès 30 à un ou plusieurs des terminaux invités 11-13. Ces échanges seront détaillés par la suite en relation avec la figure 2.

On se réfère maintenant à la **figure 2** qui décrit les étapes du procédé de configuration d'accès à un réseau hôte 1 selon un mode de réalisation particulier.

Dans ce mode de réalisation, un utilisateur hôte souhaite offrir à partir de son terminal 10 un partage d'accès au réseau hôte 1 qu'il administre à un utilisateur invité disposant de terminaux invités 11-13. Le procédé de configuration comprend trois phases P1, P2 et P3. La première phase P1 est une phase d'obtention par l'utilisateur hôte d'une liste d'utilisateurs invités. Elle est suivie d'une phase P2 consistant à configurer un point d'accès 30 au réseau hôte 1 pour autoriser l'attachement à ce réseau de terminaux invités 11-13 associés à l'utilisateur invité. La phase P3 permet quant à elle de configurer chaque terminal invité 11-13 de l'utilisateur invité pour qu'il puisse accéder au réseau hôte 1. Le procédé de configuration est mis en œuvre par un premier module de gestion d'accès réseau 40 associé à l'utilisateur hôte et par un deuxième module de gestion d'accès réseau 50 associé à l'utilisateur invité, chacun de ces deux modules dialoguant avec un réseau social 2. Les utilisateurs hôte et invité sont chacun membre du réseau social 2 et en relation l'un avec l'autre via ce réseau 2.

Dans une étape E1, le premier module de gestion 40 reçoit un message d'authentification depuis le terminal hôte 10. Ce message comprend un identifiant Id_h et un mot de passe Pwd_h associés à l'utilisateur hôte. Le premier module de gestion 40 mémorise l'identifiant Id_h, puis relaie le message d'authentification au réseau social 2 afin d'authentifier l'utilisateur hôte. L'authentification est dans ce mode de réalisation déléguée au réseau social 2. L'utilisateur hôte peut donc utiliser les identifiant et mot de passe qu'il utilise habituellement pour s'authentifier auprès du réseau social 2. Dans un autre mode de réalisation, l'utilisateur hôte s'authentifie auprès du réseau social et accède ensuite au premier module de gestion d'accès réseaux à partir de son compte utilisateur.

Lors d'une étape E2, le premier module de gestion 40 reçoit un acquittement du réseau social 2 une fois l'utilisateur hôte authentifié.

Dans une étape E3, le premier module de gestion 40 envoie au réseau social 2 une requête afin d'obtenir une liste LF d'utilisateurs en relation avec l'utilisateur hôte (e.g. amis, collègues) via le réseau social 2. Plus précisément, la liste LF est une liste d'identifiants uniques correspondant respectivement à un utilisateur du réseau social 2 en relation avec l'utilisateur hôte d'identifiant Id_h. Il est à noter que la liste LF comprend l'ensemble des utilisateurs en relation avec l'utilisateur hôte.

Le premier module de gestion 40 reçoit la liste LF lors d'une étape E4.

Dans une étape E5, cette liste est envoyée au terminal hôte 10 pour que l'utilisateur hôte puisse sélectionner à l'aide de son terminal 10 (étape F1) les utilisateurs avec qui il souhaite partager son accès au réseau hôte. La sélection de ces utilisateurs se fait par exemple via l'affichage d'une fenêtre de sélection sur l'écran du terminal hôte 10. Aucune saisie d'informations relatives aux utilisateurs invités n'est requise, ces dernières étant fournies par le réseau social 2. Une deuxième liste LV comprenant seulement les utilisateurs sélectionnés par l'utilisateur hôte est ainsi obtenue.

A l'étape E6, le premier module de gestion 40 reçoit depuis le terminal hôte 10 une requête d'offre de partage d'accès au réseau hôte en association avec un identifiant de l'utilisateur hôte et la liste LV d'utilisateurs précédemment sélectionnés pour l'offre de partage. Ces utilisateurs sont appelés par la suite «utilisateurs invités ». L'étape E6, avec l'obtention de la liste d'utilisateurs invités par le premier module de gestion 40 met fin à la première phase P1. Elle marque également le début de la deuxième phase P2 de configuration du point d'accès 30 au réseau hôte 1.

Lors de l'étape E7 le premier module de gestion 40 transmet au réseau social 2 la requête d'offre de partage d'accès au réseau hôte 1.

Dans une étape E8, le premier module de gestion 40 reçoit depuis le réseau social 2 un acquittement à la requête d'offre de partage d'accès au réseau hôte 1. Puis, pour chaque utilisateur invité de la liste LV, une adresse @MODv d'un deuxième module de gestion 50 auquel l'utilisateur invité d'identifiant Id_v est associé est également obtenue.

Lors d'une étape E9, le premier module de gestion 40 prépare une demande d'informations d'identification des terminaux invités 11-13 associés à l'utilisateur invité d'identifiant Id_v, puis l'envoie au deuxième module de gestion 50 d'adresse @MODv.

En réponse à cette demande, le premier module de gestion 40 reçoit lors d'une étape E10 une liste d'informations d'identification relatives aux terminaux invités 11-13 associés à l'utilisateur invité. Dans le présent mode de réalisation, les informations d'identification correspondent à une adresse MAC et au nom du propriétaire du terminal. Aucune limitation n'est cependant attachée aux informations d'identification, il peut s'agir d'une adresse MAC, d'un identifiant IMEI, ou de tout autre identifiant permettant d'identifier de manière unique les terminaux invités.

Lors d'une étape E11, le premier module de gestion 40 envoie une requête de configuration d'accès au réseau hôte 1. Plus précisément cette requête est envoyée au point d'accès 30 au réseau hôte 1 avec la liste des terminaux invités 11-13 associés à l'utilisateur invité et l'identifiant de l'utilisateur invité. Cette liste permet au point d'accès 30 d'autoriser un accès au réseau hôte 1 pour chacun des terminaux invités 11-13 associés à l'utilisateur invité, ceux-ci étant par exemple identifiés par leurs adresses MAC. Inversement tout terminal dont l'adresse MAC est inconnue du point d'accès 30 se voit interdire l'accès au réseau hôte 1. Cette étape de filtrage des accès en fonction des informations d'identification des terminaux invités 11-13 permet de renforcer le contrôle d'accès au réseau hôte 1.

Une fois la configuration du point d'accès 30 terminée, le premier module de gestion 40 reçoit lors d'une étape E12 un acquittement du point d'accès 30 comprenant des informations de configuration, notamment une configuration d'accès permettant d'identifier le réseau hôte 1 par les terminaux invités 11-13. Cette configuration d'accès comprend par exemple un identifiant de l'utilisateur hôte, un identifiant de l'utilisateur invité, une liste d'identifiants de terminaux invités, un identifiant du type d'authentification choisie, un identifiant du réseau hôte 1, et une clé d'accès réseau.

Les échanges entre le premier module de gestion 40 et le point d'accès 30 peuvent être réalisés par l'intermédiaire du protocole TR-069 défini par le Broadband Forum. Ces échanges peuvent également être mis en œuvre par l'intermédiaire de tout autre protocole permettant d'administrer à distance des périphériques.

Dans une étape E13, le premier module de gestion 40 met à jour une base de données dans laquelle il mémorise la configuration d'accès. Cette étape clôt la deuxième phase P2 de configuration du point d'accès 30 au réseau hôte 1. Le premier module de gestion 40 est alors prêt à fournir les informations de configuration permettant l'accès au réseau hôte 1 aux terminaux invités 11-13 qui en font la demande.

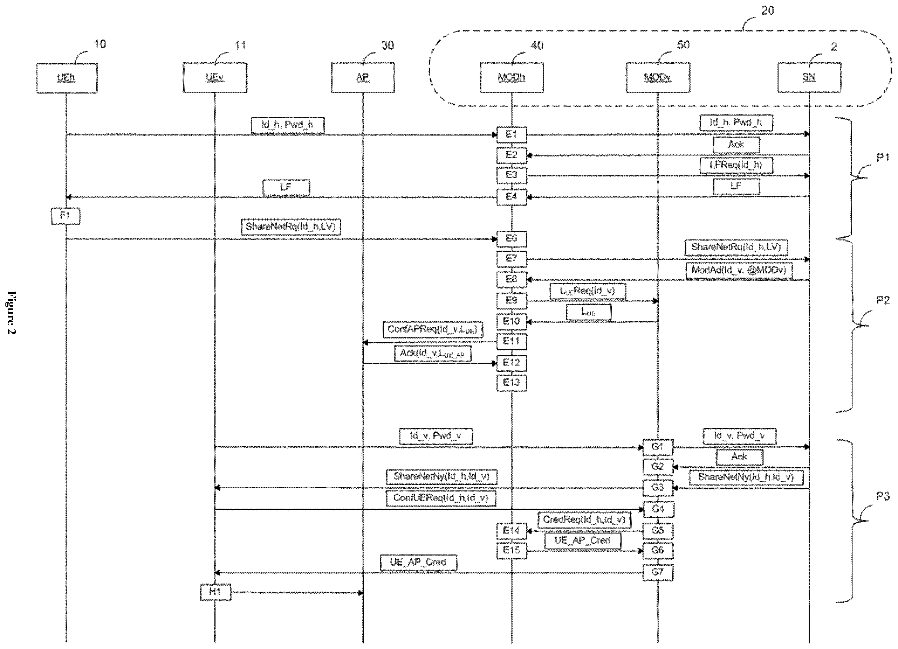

La phase P3 est réalisée pour chaque terminal invité 11-13. Afin de ne pas surcharger la figure 4, les étapes de configuration d'accès au réseau hôte 1 ont cependant été représentées pour un seul terminal invité 11. La phase P3 de configuration du terminal invité 11 débute par une étape d'authentification du terminal auprès du réseau social 2 par l'intermédiaire du deuxième module de gestion 50. Pour cela, lors d'une étape G1, le deuxième module de gestion 50 reçoit un message d'authentification comprenant un identifiant unique de l'utilisateur invité et un mot de passe permettant l'accès au réseau social 2. Le deuxième module de gestion 50 relaie ensuite le message d'authentification au réseau social 2.

Dans une étape G2, le deuxième module de gestion 50 reçoit un acquittement du réseau social 2. L'utilisateur invité est alors authentifié auprès du réseau social 2.

Lors d'une étape G3, le deuxième module de gestion 50 est notifié par le réseau social 2 de l'offre de partage d'accès au réseau hôte 1 envoyée précédemment par l'utilisateur hôte à l'aide de son terminal hôte 10 lors de la phase P1. Il suffit ainsi à un utilisateur invité de s'authentifier sur le réseau social 2 pour se voir proposer une offre de partage d'accès dont il est destinataire. Cette notification est envoyée au terminal invité 11.

Dans une étape G4, le deuxième module de gestion 50 reçoit du terminal invité 11 une requête d'accès au réseau hôte 1. L'utilisateur invité peut ainsi choisir de donner suite ou non à l'offre de partage d'accès dont il a été notifié en vue de configurer son terminal invité 11 pour accéder au réseau hôte 1. La configuration de l'accès au réseau hôte 1 n'est donc pas intrusive et permet à l'utilisateur invité de décider de sa propre initiative d'une mise à jour de la configuration de son terminal invité 11.

Après avoir reçu la requête d'accès au réseau hôte 1, le deuxième module de gestion 50 interroge lors d'une étape G5 le premier module de gestion 40 afin d'obtenir l'identifiant du réseau hôte 1 et la clé d'accès réseau permettant l'accès au réseau hôte 1. Cette interrogation s'accompagne en particulier d'un identifiant de l'utilisateur hôte, d'un identifiant de l'utilisateur invité et d'un identifiant du terminal invité 11.

Dans une étape E14, le premier module de gestion 40 reçoit la demande d'identifiant et de clé d'accès réseau associés au réseau hôte 1. Le premier module de gestion 40 interroge sa base de données avec l'identifiant de l'utilisateur hôte, l'identifiant de l'utilisateur invité et l'identifiant du terminal invité 11 reçus à l'étape précédente. Si une entrée dans sa base de données existe pour ces identifiants, le premier module de gestion 40 renvoie la clé d'accès réseau permettant d'accéder au réseau hôte 1 lors d'une étape E15.

Le deuxième module de gestion 50 reçoit les paramètres d'authentification (identifiant du réseau et clé d'accès réseau) du réseau hôte 1 lors d'une étape G6. Il peut alors envoyer l'ensemble des informations de configuration nécessaire au terminal invité 11 pour accéder au réseau hôte 1 lors d'une étape G7 qui vient terminer la troisième phase P3 du procédé. Le terminal invité 11 peut ainsi s'authentifier auprès du point d'accès 30 au réseau hôte 1 (étape H1).

Le procédé de configuration d'accès au réseau hôte 1 a été décrit pour un seul utilisateur invité et un seul terminal invité 11. Il n'existe cependant pas de caractère limitatif quant au nombre d'utilisateurs invités ou de terminaux invités 11-13. Les étapes E8 à E13 sont notamment répétées pour chaque utilisateur invité de la liste d'utilisateurs invités obtenue lors de la phase P1. De même les étapes G1 à G7 sont réitérées pour chaque terminal invité 11-13 avec lequel un utilisateur invité souhaite accéder au réseau hôte 1.

Dans un mode particulier de réalisation, les utilisateurs invités ont la possibilité d'accepter ou de refuser l'offre de partage d'accès au réseau hôte 1 envoyée par le premier module de gestion 40 lors de l'étape E7. L'étape E8 est alors adaptée afin d'interroger chaque utilisateur invité une fois la requête d'offre de partage d'accès au réseau hôte 1 acquittée. Après envoi du message d'acquittement, le réseau social 2 transmet à chaque deuxième module de gestion 50 associé à un utilisateur invité une notification indiquant le souhait de l'utilisateur hôte d'offrir un partage d'accès au réseau hôte 1. Chaque deuxième module de gestion 50 relaie la notification auprès des terminaux associés à chacun des utilisateurs invités. Chaque utilisateur invité peut alors accepter ou refuser l'offre proposée à partir de l'un de ses terminaux invités 11-13 qui lui sont associés via son deuxième module de gestion d'accès 50.

Cette offre est communiquée, par exemple, à chaque utilisateur invité par l'affichage d'un message sur l'écran des terminaux invités 11-13. En cas de refus, le terminal invité 11 envoie un message de refus de l'offre de partage d'accès au réseau hôte 1 au deuxième module de gestion d'accès 50. Ce dernier relaie le message de refus au réseau social 2 qui lui-même envoie au premier module de gestion 40 une requête afin d'interrompre le procédé de configuration d'accès en cours pour l'utilisateur invité associé au deuxième module de gestion 50. Selon une autre variante, le deuxième module de gestion 50 relaie la notification indiquant le souhait de l'utilisateur hôte d'offrir un partage d'accès au réseau hôte 1, non pas aux terminaux associés à chacun des utilisateurs invités, mais à un terminal déclaré « terminal principal » au sein du deuxième module de gestion d'accès 50 associé à chaque utilisateur invité.

Dans un autre mode de réalisation, lors de l'étape E10 le deuxième module de gestion 50 ne retourne au premier module de gestion 40 que les terminaux invités sélectionnés par l'utilisateur invité. Consécutivement à l'étape E9 d'envoi d'une demande d'informations d'identification des terminaux invités 11-13 associés à l'utilisateur invité, le deuxième module de gestion 50 interroge par exemple chaque terminal invité 11-13 associé à l'utilisateur invité afin que ce dernier donne son accord à la fourniture des informations d'identification relatives au terminal invité interrogé. Un message de réponse indiquant si le terminal invité interrogé autorise l'accès à ses informations d'identification est envoyé au deuxième module de gestion 50. Ce dernier construit une liste d'informations d'identification relatives aux seuls terminaux invités 11-13 sélectionnés par l'utilisateur invité, et l'envoie au deuxième module de gestion 50 de l'utilisateur hôte.

Dans un autre mode de réalisation, préalablement à l'étape E11, le procédé de configuration d'accès au réseau hôte 1 comprend une étape de génération de paramètres d'authentification uniques pour chaque terminal invité 11-13. En particulier les paramètres d'authentification sont spécifiques à chaque terminal invité 11-13. Ils sont par exemple générés à partir des informations d'identification des terminaux invités 11-13 dont dispose le deuxième module de gestion 40. Ce dernier crée par exemple un identifiant SSID et une clé d'accès au réseau hôte 1 distincts pour chaque terminal invité 11-13, à partir d'un identifiant unique de chaque terminal invité 11-13, tel qu'une adresse MAC et d'une fonction génératrice de nombres aléatoires. Ces couples d'identifiant et de clé d'accès associés respectivement à chaque terminal invité 11-13 sont ensuite envoyés au point d'accès 30 avec la requête de configuration d'accès au réseau hôte 1. Les informations sensibles d'accès au réseau hôte 1 n'étant pas partagées entre terminaux invités, la sécurité du réseau hôte 1 se trouve renforcée. Selon une variante, un accès au réseau hôte 1 propre à chaque utilisateur invité peut également être défini.

Dans un autre mode de réalisation, consécutivement à l'étape E13 de mise à jour de sa base de données, le premier module de gestion 40 envoie au deuxième module de gestion 50 la configuration d'accès mémorisée. Le deuxième module de gestion 50 associé à l'utilisateur invité dispose ainsi de l'ensemble des informations de configuration permettant l'accès au réseau hôte 1 pour le terminal invité 11. Les étapes G5 et E14 respectivement d'envoi par le deuxième module de gestion 50 et de réception par le premier module de gestion 40, d'une requête afin d'obtenir l'identifiant et la clé d'accès au réseau hôte 1 sont alors inutiles. Il en est de même pour les étapes E15 et G6 respectivement d'envoi par le premier module de gestion 40 et de réception par le deuxième module de gestion 50, de l'identifiant et de la clé d'accès au réseau hôte 1.

Dans un mode particulier de réalisation, lorsque la configuration du point d'accès 30 est terminée, c'est-à-dire une fois les informations de configuration obtenues à l'étape E12 puis mémorisées par le premier module de gestion 40 à l'étape E13, l'utilisateur hôte peut mettre à jour les informations de configuration permettant l'accès au réseau hôte 1. Le procédé lorsqu'il est mis en œuvre par le premier module de gestion 40 comprend alors une étape de mise à jour de ces informations. Cette mise à jour consiste par exemple à supprimer le partage d'accès au réseau hôte 1 pour un ou plusieurs utilisateurs invités, ou encore pour un type de terminal invité 11-13 particulier. Il peut également s'agir d'une modification du partage d'accès au réseau hôte 1 pour un ou plusieurs utilisateurs invités, ou un type de terminal invité 11-13 particulier. L'utilisateur hôte peut notamment souhaiter faire évoluer le niveau de sécurité applicable pour un utilisateur invité ou un terminal invité. Plus précisément l'étape de mise à jour est mise en œuvre via une sous-étape de réception depuis le terminal hôte 10 d'une requête de mise à jour de la configuration d'accès au réseau hôte 1.

Dans un autre mode de réalisation, la requête de mise à jour de la configuration d'accès peut également être reçue du deuxième module de gestion 50. L'utilisateur invité obtient par exemple par l'intermédiaire d'un terminal invité la liste de ses terminaux invités auprès du deuxième module de gestion 50. Puis l'utilisateur invité sélectionne les terminaux invités pour lesquels il souhaite supprimer l'accès au réseau hôte 1. Une requête de mise à jour de la configuration d'accès au réseau hôte 1 pour les terminaux sélectionnés est alors envoyée au deuxième module de gestion 50, qui relaie la requête au premier module de gestion 40. Un utilisateur invité victime d'un vol pour un terminal invité peut ainsi aisément demander la suppression de la configuration d'accès relative à ce terminal.

Il est par ailleurs à noter que la suppression d'un accès au réseau hôte 1 pour un terminal invité, revient à interdire l'accès au réseau hôte 1 pour ce terminal.

Dans le cas d'un réseau hôte non sécurisé, le procédé peut également être facilement adapté pour interdire un accès au réseau hôte à certains terminaux. La liste d'utilisateurs invités obtenue lors de la phase P1 est alors une liste d'utilisateurs à qui l'accès au réseau hôte est à interdire. La phase P2 consiste à configurer le point d'accès 30 au réseau hôte 1 pour interdire l'attachement à ce réseau de terminaux associés aux utilisateurs interdits d'accès. La phase P3 quant à elle, n'est pas mise en œuvre.

Aucune limitation n'est attachée quant aux technologies d'échanges utilisées. L'invention peut notamment être mise en œuvre au-dessus des protocoles HTTPS (*Hypertext Transfer Protocol Secure*) ou de toute autre suite de protocoles intégrant une couche de chiffrement. Les données sensibles, telles que les identifiants et clés d'accès réseau sont systématiquement chiffrées lorsqu'elles sont échangées entre des modules, dispositifs ou entités du réseau (e.g. terminal, point d'accès, réseau social). Les clés sont par exemple envoyées par l'intermédiaire d'un cookie XACML (pour *eXtensible Access Control Markup Language*). Il est également possible pour les premier et deuxième modules de gestion 40, 50, d'utiliser des clés de chiffrement/déchiffrement obtenues auprès du réseau social 2 afin de garantir la confidentialité et l'intégrité des données sensibles échangées.

La figure 3 représente un premier module de gestion 40 d'accès à un réseau hôte 1 agencé pour, lorsqu'il est associé à un utilisateur hôte, autoriser un accès à ce réseau hôte 1 pour au moins un terminal invité associé à un utilisateur invité.

Ce premier module 40 comprend notamment :
- un premier sous-module de communication 400 agencé pour communiquer avec un réseau social 2, les utilisateurs hôte et invité étant en relation par l'intermédiaire dudit réseau social 2 ;
- un premier sous-module de réception 404 agencé pour recevoir, depuis un terminal hôte 10 associé à un utilisateur hôte, une offre de partage d'accès au réseau hôte 1 destinée à l'utilisateur invité ;
- un premier sous-module d'envoi 410 agencé pour envoyer à un deuxième module 50 de gestion d'accès réseaux associé à l'utilisateur invité, une demande d'informations d'identification du terminal invité 11, et pour envoyer au deuxième module 50 des informations de configuration destinées au terminal invité 11 identifié, lesdites informations de configuration permettant l'accès au réseau hôte 1 ;
- un deuxième sous-module de réception 408 agencé pour recevoir du deuxième module de gestion d'accès réseaux 50, des informations d'identification du terminal invité 11 ;
- un deuxième sous-module d'envoi 406 agencé pour envoyer au réseau hôte 1 une requête de configuration d'accès, cette configuration une fois effectuée permettant d'autoriser un accès au réseau hôte 1 pour le terminal invité 11 identifié ;
- un sous-module de calcul 402 agencé pour générer des paramètres d'authentification associés au terminal invité 11.

Dans un autre mode de réalisation, le premier module de gestion 40 ne comporte pas de sous-module de calcul 402. C'est en particulier le cas dans un mode de réalisation sans génération de paramètres d'authentification associés à un terminal invité.

La **figure 4** représente un deuxième module de gestion d'accès réseaux 50 agencé pour, lorsqu'il est associé à un utilisateur invité, autoriser un accès à un réseau hôte 1 pour au moins un terminal invité 11-13 associé à cet utilisateur invité.

Ce deuxième module 50 comprend notamment :
- un premier sous-module de communication 500 agencé pour communiquer avec un réseau social 2, et notamment agencé pour recevoir depuis le réseau social 2, une offre de partage d'accès au réseau hôte 1 destinée à l'utilisateur invité, les utilisateurs hôte et invité étant en relation par l'intermédiaire du réseau social 2 ;
- un premier sous-module d'envoi/réception 502 agencé pour recevoir depuis le terminal invité une requête d'accès au réseau hôte 1, et envoyer des informations de configuration à ce terminal invité 11 ;
- un deuxième sous-module d'envoi/réception 504 agencé pour recevoir depuis un deuxième module de gestion d'accès réseaux 40 associé à l'utilisateur hôte, une demande d'identification du terminal invité 11, envoyer à ce deuxième module 40 des informations d'identification dudit terminal invité 11, et recevoir des informations de configuration comprenant une configuration d'accès permettant l'accès du terminal invité 11 au réseau hôte 1, le terminal ayant préalablement été identifié par le deuxième module de gestion 40 via les informations d'identifications envoyées.

Les modules de gestions d'accès réseau 40, 50, décrits en relation avec les figures 2 et 3 sont par exemple une application logicielle, typiquement une application du réseau social 2 dite « application Facebook ® » installée sur le terminal de l'utilisateur hôte et sur les terminaux invités 11-13. Il peut également s'agir d'une application logicielle installée sur une passerelle réseau ou tout autre dispositif permettant un accès à un réseau hôte 1 et interfacé avec un réseau social 2.

L'invention est mise en œuvre au moyen de composants logiciels et/ou matériels. Dans cette optique, les termes « module » et « sous-module » peuvent correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module ou sous-module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les sous-modules 400, 402, 404, 406, 408, 410, 500, 502 et 504 sont agencés pour mettre en œuvre le procédé de configuration d'accès à un réseau hôte précédemment décrit. Il s'agit de préférence de sous-modules logiciels comprenant des instructions logicielles pour faire exécuter les étapes du procédé de configuration d'accès à un réseau hôte précédemment décrit, mises en œuvre par un module de gestion d'accès réseaux. L'invention concerne donc aussi :
- un programme pour un module, comprenant des instructions de code de programme destinées à commander l'exécution des étapes du procédé de configuration d'accès à un réseau hôte précédemment décrit, lorsque ledit programme est exécuté par ledit module ;
- un support d'enregistrement lisible par un module sur lequel est enregistré le programme pour un module.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de configuration d'accès à un réseau (1), dit réseau hôte, pour permettre à au moins un terminal (11-13) associé à un utilisateur invité, dit terminal invité, d'accéder audit réseau hôte (1), ledit procédé étant mis en œuvre par un premier module de gestion d'accès réseaux (40) associé à un utilisateur hôte, et comprenant les étapes suivantes :
- réception (E6) depuis un terminal associé à l'utilisateur hôte, d'une offre de partage d'accès au réseau hôte destinée à l'utilisateur invité, lesdits utilisateurs hôte et invité étant en relation par l'intermédiaire d'un réseau social (2) ;
- obtention (E9, E10) auprès d'un deuxième module de gestion d'accès réseaux (50) associé audit utilisateur invité, d'informations d'identification dudit terminal invité (11) ;
- génération, à partir des informations d'identification obtenues et d'une fonction génératrice de nombres aléatoires, de paramètres d'authentification, comprenant un identifiant du réseau hôte et une clé d'accès au réseau hôte spécifiques au terminal invité, pour l'accès audit réseau hôte ;
- envoi au réseau hôte d'une requête de configuration d'accès comprenant lesdites informations d'identification et les paramètres d'authentification générés ;
- obtention (E12) auprès du réseau hôte (1) d'informations de configuration permettant l'accès au réseau hôte (1) par le terminal invité, lesdites informations de configuration comprenant lesdits paramètres d'authentification ; et
- envoi au deuxième module de gestion (50) desdites informations de configuration, destinées à être transmises au terminal invité (11) pour lui permettre d'accéder au réseau hôte (1).

2. Procédé de configuration d'accès selon la revendication 1, comprenant en outre préalablement à l'étape d'obtention (E9, E10) d'informations d'identification, une étape d'obtention (E8) par l'intermédiaire du réseau social (2) d'une adresse du deuxième module de gestion (50), ladite adresse étant utilisée lors de l'obtention des informations d'identification auprès du deuxième module de gestion.

3. Procédé de configuration d'accès selon l'une des revendications 1 à 2, comprenant en outre préalablement à l'étape de réception (E6), une étape d'obtention (E3, E4) par l'intermédiaire du réseau social d'une liste d'utilisateurs invités, les étapes du procédé étant réitérées pour chaque utilisateur invité de ladite liste.

4. Procédé de configuration d'accès selon l'une des revendications 1 à 3, comprenant en outre une étape de mise à jour desdites informations de configuration permettant l'accès au réseau hôte (1) par le terminal invité.

5. Procédé de configuration d'accès à un réseau (1), dit réseau hôte, pour permettre à un terminal (11-13) associé à un utilisateur invité, dit terminal invité, d'accéder audit réseau hôte, ledit procédé étant mis en œuvre par un premier module de gestion d'accès réseaux (50) associé à un utilisateur invité, et comprenant les étapes suivantes :
- fourniture d'informations d'identification du terminal invité (11) à un deuxième module de gestion d'accès réseaux (40) associé au réseau hôte (1), en réponse à une demande d'informations d'identification du terminal invité reçue dudit deuxième module (40) ;
- réception (G3) depuis un terminal associé à l'utilisateur hôte, par l'intermédiaire d'un réseau social (2), d'une offre de partage d'accès au réseau hôte (1) destinée à l'utilisateur invité, lesdits utilisateurs hôte et invité étant en relation par l'intermédiaire du réseau social (2) ;
- réception (G4) d'une requête d'accès au réseau hôte (1) depuis le terminal invité (11) ; et
- envoi (G7) au terminal invité (11) d'informations de configuration obtenues auprès du deuxième module de gestion (40), lesdites informations de configuration comprenant une configuration d'accès permettant au terminal invité d'accéder au réseau hôte (1), obtenue par le deuxième module de gestion (40) au moyen des informations d'identification du terminal invité, et des paramètres d'authentification, générés à partir des informations d'identification et d'une fonction génératrice de nombres aléatoires, comprenant un identifiant du réseau hôte et une clé d'accès au réseau hôte, spécifiques au terminal invité, pour l'accès audit réseau hôte.

6. Procédé de configuration d'accès selon la revendication 5, dans lequel la fourniture des informations d'identification est réalisée après réception d'un message de sélection du terminal invité (11) par l'utilisateur invité.

7. Procédé de configuration d'accès selon la revendication 5 ou 6, comprenant en outre préalablement à l'étape de réception (G4) de la requête d'accès, une étape d'obtention auprès du terminal invité (11) d'un accord de l'utilisateur invité à l'offre de partage d'accès reçue de l'utilisateur hôte.

8. Module de gestion d'accès réseaux (40) agencé pour autoriser un accès à un réseau hôte (1) à au moins un terminal invité (11) associé à un utilisateur invité, ledit module étant associé à un utilisateur hôte, comprenant :
- un premier sous-module de communication (400) agencé pour communiquer avec un réseau social (2), lesdits utilisateurs étant en relation par l'intermédiaire dudit réseau social (2) ;
- un sous module de calcul agencé pour générer à partir des informations d'identification obtenues et d'une fonction génératrice de nombres aléatoires, des paramètres d'authentification, comprenant un identifiant du réseau hôte et une clé d'accès au réseau hôte, spécifiques au terminal invité, pour l'accès audit réseau hôte ;
- un premier sous-module de réception (404) agencé pour recevoir depuis un terminal associé à un utilisateur hôte une offre de partage d'accès au réseau hôte destinée à l'utilisateur invité ;
- un premier sous-module d'envoi (410) agencé pour envoyer à un deuxième module de gestion d'accès réseaux (50) associé audit utilisateur invité, une demande d'informations d'identification dudit au moins un terminal invité (11), et pour envoyer audit deuxième module de gestion (50) des informations de configuration destinées au terminal (11) invité identifié, lesdites informations de configuration permettant l'accès au réseau hôte (1) ;
- un deuxième sous-module de réception (408) agencé pour recevoir d'un deuxième module de gestion d'accès réseaux (50) associé audit utilisateur invité, des informations d'identification dudit au moins un terminal invité (11) ;
- un deuxième sous-module d'envoi (406) agencé pour envoyer au réseau hôte (1) une requête de configuration d'accès, comprenant lesdites informations d'identification dudit au moins un terminal invité (11) et les paramètres d'authentification générés, ladite configuration une fois effectuée permettant d'autoriser un accès au réseau hôte (1) audit terminal invité (11) identifié.

9. Module de gestion d'accès réseaux (50) agencé pour autoriser un accès à un réseau hôte (1) à au moins un terminal invité (11) associé à un utilisateur invité, ledit module (50) étant associé à un utilisateur invité, comprenant :
- un premier sous-module de communication (500) agencé pour communiquer avec un réseau social (2), notamment agencé pour recevoir depuis le réseau social (2), une offre de partage d'accès au réseau hôte (1) destinée à l'utilisateur invité, lesdits utilisateurs étant en relation par l'intermédiaire du réseau social (2) ;
- un premier sous-module d'envoi/réception (502) agencé pour recevoir depuis le terminal invité (11) une requête d'accès au réseau hôte (1), et envoyer des informations de configuration audit terminal invité (11) ;
- un deuxième sous-module d'envoi/réception (504) agencé pour recevoir depuis un deuxième module de gestion d'accès réseaux (40) associé à l'utilisateur hôte une demande d'identification du terminal invité (11), envoyer audit deuxième module (40) des informations d'identification dudit terminal invité (11), et recevoir dudit deuxième module des informations de configuration comprenant une configuration d'accès et des paramètres d'authentification, générés à partir des informations d'identification et d'une fonction génératrice de nombres aléatoires, lesdits paramètres d'authentification, comprenant un identifiant du réseau hôte et une clé d'accès au réseau hôte spécifiques au terminal invité permettant l'accès du terminal invité (11) au réseau hôte (1), le terminal invité (11) ayant préalablement été identifié par le deuxième module de gestion (40) via les informations d'identification envoyées.

10. Système (20) de configuration d'accès à un réseau hôte (1), ledit système (20) comprenant :
- un module de gestion d'accès réseaux (40) selon la revendication 8 ;
- un module de gestion d'accès réseaux (50) selon la revendication 9 ;
- un réseau social (2).

11. Programme pour un module de gestion d'accès réseaux (40, 50), comprenant des instructions de code de programme destinées à commander l'exécution des étapes du procédé selon l'une des revendications 1 à 7, lorsque ledit programme est exécuté par ledit module (40, 50).

12. Support d'enregistrement lisible par un module (40, 50) sur lequel est enregistré le programme selon la revendication 11.

## Patentansprüche

1. Verfahren zum Konfigurieren eines Zugangs zu einem Netzwerk (1), Host-Netzwerk genannt, um wenigstens einem Endgerät (11-13), das einem eingeladenen Benutzer zugeordnet ist, eingeladenes Endgerät genannt, zu ermöglichen, auf das Host-Netzwerk (1) zuzugreifen, wobei das Verfahren von einem ersten Netzzugangs-Verwaltungsmodul (40) durchgeführt wird, das einem Host-Benutzer zugeordnet ist, und die folgenden Schritte umfasst:
- Empfang (E6), von einem dem Host-Benutzer zugeordneten Endgerät, eines für den eingeladenen Benutzer bestimmten Angebots zum Teilen des Zugangs zum Host-Netzwerk, wobei der Host-Benutzer und der eingeladene Benutzer über ein soziales Netzwerk (2) in Beziehung stehen;
- Gewinnung (E9, E10), von einem zweiten Netzzugangs-Verwaltungsmodul (50), das dem eingeladenen Benutzer zugeordnet ist, von Identifikationsinformationen des eingeladenen Endgerätes (11);
- Erzeugung, anhand der gewonnenen Identifikationsinformationen und einer Funktion zur Erzeugung von Zufallszahlen, von Authentifikationsparametern, die eine Kennung des Host-Netzwerks und einen Zugangsschlüssel zu dem Host-Netzwerk, die für das eingeladene Endgerät spezifisch sind, für den Zugang zum Host-Netzwerk umfassen;
- Senden, an das Host-Netzwerk, einer Anforderung zur Zugangskonfiguration, welche die Identifikationsinformationen und die erzeugten Authentifikationsparameter umfasst;
- Gewinnung (E12), vom Host-Netzwerk (1), von Konfigurationsinformationen, die den Zugriff auf das Host-Netzwerk (1) durch das eingeladene Endgerät ermöglichen, wobei die Konfigurationsinformationen die Authentifikationsparameter umfassen; und
- Senden, an das zweite Verwaltungsmodul (50), der Konfigurationsinformationen, die dazu bestimmt sind, an das eingeladene Endgerät (11) übertragen zu werden, um ihm zu ermöglichen, auf das Host-Netzwerk (1) zuzugreifen.

2. Verfahren zum Konfigurieren eines Zugangs nach Anspruch 1, welches außerdem, vor dem Schritt der Gewinnung (E9, E10) von Identifikationsinformationen, einen Schritt der Gewinnung (E8) einer Adresse des zweiten Verwaltungsmoduls (50) über das soziale Netzwerk (2) umfasst, wobei diese Adresse bei der Gewinnung der Identifikationsinformationen von dem zweiten Verwaltungsmodul verwendet wird.

3. Verfahren zum Konfigurieren eines Zugangs nach einem der Ansprüche 1 bis 2, welches außerdem, vor dem Schritt des Empfangs (E6), einen Schritt der Gewinnung (E3, E4) einer Liste von eingeladenen Benutzern über das soziale Netzwerk umfasst, wobei die Schritte des Verfahrens für jeden eingeladenen Benutzer der Liste wiederholt werden.

4. Verfahren zum Konfigurieren eines Zugangs nach einem der Ansprüche 1 bis 3, welches außerdem einen Schritt der Aktualisierung der Konfigurationsinformationen umfasst, die den Zugriff auf das Host-Netzwerk (1) durch das eingeladene Endgerät ermöglichen.

5. Verfahren zum Konfigurieren eines Zugangs zu einem Netzwerk (1), Host-Netzwerk genannt, um einem Endgerät (11-13), das einem eingeladenen Benutzer zugeordnet ist, eingeladenes Endgerät genannt, zu ermöglichen, auf das Host-Netzwerk zuzugreifen, wobei das Verfahren von einem ersten Netzzugangs-Verwaltungsmodul (50) durchgeführt wird, das einem eingeladenen Benutzer zugeordnet ist, und die folgenden Schritte umfasst:
- Lieferung von Identifikationsinformationen des eingeladenen Endgerätes (11) an ein zweites Netzzugangs-Verwaltungsmodul (40), das dem Host-Netzwerk (1) zugeordnet ist, in Reaktion auf eine Anforderung von Identifikationsinformationen des eingeladenen Endgerätes, die von dem zweiten Modul (40) kommend empfangen wurde;
- Empfang (G3) von einem dem Host-Benutzer zugeordneten Endgerät, über ein soziales Netzwerk (2), eines für den eingeladenen Benutzer bestimmten Angebots zum Teilen des Zugangs zum Host-Netzwerk (1), wobei der Host-Benutzer und der eingeladene Benutzer über das soziale Netzwerk (2) in Beziehung stehen;
- Empfang (G4) einer Anforderung des Zugriffs auf das Host-Netzwerk (1) von dem eingeladenen Endgerät (11); und
- Senden (G7) von Konfigurationsinformationen, die von dem zweiten Verwaltungsmodul (40) bezogen wurden, an das eingeladene Endgerät (11), wobei die Konfigurationsinformationen eine Zugangskonfiguration umfassen, die dem eingeladene Endgerät ermöglicht, auf das Host-Netzwerk (1) zuzugreifen, und die durch das zweite Verwaltungsmodul (40) mittels der Identifikationsinformationen des eingeladenen Endgerätes und der Authentifikationsparameter gewonnen wurde, die anhand der Identifikationsinformationen und einer Funktion zur Erzeugung von Zufallszahlen erzeugt wurden und die eine Kennung des Host-Netzwerks und einen Zugangsschlüssel zu dem Host-Netzwerk, die für das eingeladene Endgerät spezifisch sind, für den Zugang zum Host-Netzwerk umfassen.

6. Verfahren zum Konfigurieren eines Zugangs nach Anspruch 5, wobei die Lieferung der Identifikationsinformationen nach Empfang einer Nachricht zur Auswahl des eingeladenen Endgerätes (11) durch den eingeladenen Benutzer durchgeführt wird.

7. Verfahren zum Konfigurieren eines Zugangs nach Anspruch 5 oder 6, welches außerdem vor dem Schritt des Empfangs (G4) der Zugangsanforderung einen Schritt des Einholens, von dem eingeladenen Endgerät (11), einer Zustimmung des eingeladenen Benutzers zu dem Angebot zum Teilen des Zugangs, das vom Host-Benutzer kommend empfangen wurde, umfasst.

8. Netzzugangs-Verwaltungsmodul (40), welches dafür ausgelegt ist, einen Zugang zu einem Host-Netzwerk (1) für wenigstens ein eingeladenes Endgerät (11), das einem eingeladenen Benutzer zugeordnet ist, zu autorisieren, wobei das Modul einem Host-Benutzer zugeordnet ist, umfassend:
- ein erstes Kommunikations-Untermodul (400), das dafür ausgelegt ist, mit einem sozialen Netzwerk (2) zu kommunizieren, wobei die Benutzer über das soziale Netzwerk (2) in Beziehung stehen;
- ein Berechnungs-Untermodul, das dafür ausgelegt ist, anhand der gewonnenen Identifikationsinformationen und einer Funktion zur Erzeugung von Zufallszahlen Authentifikationsparameter zu erzeugen, die eine Kennung des Host-Netzwerks und einen Zugangsschlüssel zu dem Host-Netzwerk, die für das eingeladene Endgerät spezifisch sind, für den Zugang zum Host-Netzwerk umfassen;
- ein erstes Empfangs-Untermodul (404), das dafür ausgelegt ist, von einem Endgerät, das einem Host-Benutzer zugeordnet ist, ein für einen eingeladenen Benutzer bestimmtes Angebot zum Teilen des Zugangs zum Host-Netzwerk zu empfangen;
- ein erstes Sende-Untermodul (410), das dafür ausgelegt ist, an ein zweites Netzzugangs-Verwaltungsmodul (50), das dem eingeladenen Benutzer zugeordnet ist, eine Anforderung von Identifikationsinformationen des wenigstens einen eingeladenen Endgerätes (11) zu senden und an das zweite Verwaltungsmodul (50) Konfigurationsinformationen zu senden, die für das identifizierte eingeladene Endgerät (11) bestimmt sind, wobei die Konfigurationsinformationen den Zugriff auf das Host-Netzwerk (1) ermöglichen;
- ein zweites Empfangs-Untermodul (408), das dafür ausgelegt ist, von einem zweiten Netzzugangs-Verwaltungsmodul (50), das dem eingeladenen Benutzer zugeordnet ist, Identifikationsinformationen des wenigstens einen eingeladenen Endgerätes (11) zu empfangen;
- ein zweites Sende-Untermodul (406), das dafür ausgelegt ist, an das Host-Netzwerk (1) eine Anforderung zur Zugangskonfiguration zu senden, welche die Identifikationsinformationen des wenigstens einen eingeladenen Endgerätes (11) und die erzeugten Authentifikationsparameter umfasst, wobei die Konfiguration, nachdem sie durchgeführt wurde, ermöglicht, einen Zugriff auf das Host-Netzwerk (1) für das identifizierte eingeladene Endgerät (11) zu autorisieren.

9. Netzzugangs-Verwaltungsmodul (50), welches dafür ausgelegt ist, einen Zugang zu einem Host-Netzwerk (1) für wenigstens ein eingeladenes Endgerät (11), das einem eingeladenen Benutzer zugeordnet ist, zu autorisieren, wobei das Modul (50) einem eingeladenen Benutzer zugeordnet ist, umfassend:
- ein erstes Kommunikations-Untermodul (500), das dafür ausgelegt ist, mit einem sozialen Netzwerk (2) zu kommunizieren, und insbesondere dafür ausgelegt ist, von dem sozialen Netzwerk (2) ein für den eingeladenen Benutzer bestimmtes Angebot zum Teilen des Zugangs zum Host-Netzwerk (1) zu empfangen, wobei die Benutzer über das soziale Netzwerk (2) in Beziehung stehen;
- ein erstes Sende-/Empfangs-Untermodul (502), das dafür ausgelegt ist, von dem eingeladenen Endgerät (11) eine Anforderung des Zugriffs auf das Host-Netzwerk (1) zu empfangen und Konfigurationsinformationen an das eingeladene Endgerät (11) zu senden;
- ein zweites Sende-/Empfangs-Untermodul (504), das dafür ausgelegt ist, von einem zweiten Netzzugangs-Verwaltungsmodul (40), das dem Host-Benutzer zugeordnet ist, eine Anforderung zur Identifikation des eingeladenen Endgerätes (11) zu empfangen, an das zweite Modul (40) Identifikationsinformationen des eingeladenen Endgerätes (11) zu senden und von dem zweiten Modul Konfigurationsinformationen zu empfangen, die eine Zugangskonfiguration und Authentifikationsparameter, die anhand der Identifikationsinformationen und einer Funktion zur Erzeugung von Zufallszahlen erzeugt wurden, umfassen, wobei die Authentifikationsparameter, die eine Kennung des Host-Netzwerks und einen Zugangsschlüssel zu dem Host-Netzwerk, die für das eingeladene Endgerät spezifisch sind, umfassen, den Zugang des eingeladenen Endgerätes (11) zu dem Host-Netzwerk (1) ermöglichen, wobei das eingeladene Endgerät (11) zuvor von dem zweiten Verwaltungsmodul (40) über die gesendeten Identifikationsinformationen identifiziert wurde.

10. System (20) zur Konfiguration des Zugangs zu einem Host-Netzwerk (1), wobei das System (20) umfasst:
- ein Netzzugangs-Verwaltungsmodul (40) nach Anspruch 8;
- ein Netzzugangs-Verwaltungsmodul (50) nach Anspruch 9;
- ein soziales Netzwerk (2).

11. Programm für ein Netzzugangs-Verwaltungsmodul (40, 50), welches Programmcodeanweisungen umfasst, die dazu bestimmt sind, die Ausführung der Schritte des Verfahrens nach einem der Ansprüche 1 bis 7 zu steuern, wenn das Programm von dem Modul (40, 50) ausgeführt wird.

12. Aufzeichnungsmedium, das von einem Modul (40, 50) lesbar ist und auf welchem das Programm nach Anspruch 11 aufgezeichnet ist.

## Claims

1. Method for configuring access to a network (1), called host network, to allow at least one terminal (11-13) associated with an invited user, called invited terminal, to access said host network (1), said method being implemented by a first network access management module (40) associated with a host user, and comprising the following steps:
- receiving (E6), from a terminal associated with the host user, an offer of shared access to the host network intended for the invited user, said host and invited users being connected via a social network (2);
- obtaining (E9, E10), from a second network access management module (50) associated with said invited user, information identifying said invited terminal (11);
- generating, on the basis of the obtained identification information and a random number generator function, authentication parameters, comprising a host network identifier and a host network access key which are specific to the invited terminal, for access to said host network;
- sending, to the host network, an access configuration request comprising said identification information and the authentication parameters generated;
- obtaining (E12), from the host network (1), configuration information allowing access to the host network (1) by the invited terminal, said configuration information comprising said authentication parameters; and
- sending, to the second management module (50), said configuration information, intended to be transmitted to the invited terminal (11) to allow it to access the host network (1).

2. Access configuration method according to Claim 1, further comprising, prior to the step of obtaining (E9, E10) identification information, a step of obtaining (E8), via the social network (2) an address of the second management module (50), said address being used in the obtaining of the identification information from the second management module.

3. Access configuration method according to either of Claims 1 and 2, further comprising, prior to the reception step (E6), a step of obtaining (E3, E4), via the social network, a list of invited users, the steps of the method being reiterated for each invited user in said list.

4. Access configuration method according to one of Claims 1 to 3, further comprising a step of updating said configuration information allowing access to the host network (1) by the invited terminal.

5. Method for configuring access to a network (1), called host network, to allow a terminal (11-13) associated with an invited user, called invited terminal, to access said host network, said method being implemented by a first network access management module (50) associated with an invited user, and comprising the following steps:
- supplying information identifying the invited terminal (11) to a second network access management module (40) associated with the host network (1), in response to a request for information identifying the invited terminal received from said second module (40);
- receiving (G3), from a terminal associated with the host user, via a social network (2), an offer of shared access to the host network (1) intended for the invited user, said host and invited users being connected via the social network (2);
- receiving (G4) a request to access the host network (1) from the invited terminal (11); and
- sending (G7), to the invited terminal (11), configuration information obtained from the second management module (40), said configuration information comprising an access configuration allowing the invited terminal to access the host network (1), obtained by the second management module (40) by means of the information identifying the invited terminal, and authentication parameters, generated on the basis of the identification information and a random number generator function, comprising a host network identifier and a host network access key, which are specific to the invited terminal, for access to said host network.

6. Access configuration method according to Claim 5, in which the identification information is supplied after the reception of a message selecting the invited terminal (11) by the invited user.

7. Access configuration method according to Claim 5 or 6, further comprising, prior to the step of receiving (G4) the access request, a step of obtaining, from the invited terminal (11), an agreement from the invited user to the offer of shared access received from the host user.

8. Network access management module (40) arranged to authorize access to a host network (1) for at least one invited terminal (11) associated with an invited user, said module being associated with a host user, comprising:
- a first communication submodule (400) arranged to communicate with a social network (2), said users being connected via said social network (2);
- a calculation submodule arranged to generate, on the basis of the obtained authentication information and a random number generator function, authentication parameters, comprising an identifier of the host network and a host network access key, which are specific to the invited terminal, for access to said host network;
- a first reception submodule (404) arranged to receive, from a terminal associated with a host user, an offer of shared access to the host network intended for the invited user;
- a first sending submodule (410) arranged to send, to a second network access management module (50) associated with said invited user, a request for information identifying said at least one invited terminal (11), and to send, to said second management module (50), configuration information intended for the identified invited terminal (11), said configuration information allowing access to the host network (1);
- a second reception submodule (408) arranged to receive, from a second network access management module (50) associated with said invited user, information identifying said at least one invited terminal (11);
- a second sending submodule (406) arranged to send, to the host network (1), an access configuration request, comprising said information identifying said at least one invited terminal (11) and the generated authentication parameters, said configuration, once done, making it possible to authorize said identified invited terminal (11) to access the host network (1).

9. Network access management module (50) arranged to authorize at least one invited terminal (11) associated with an invited user to access a host network (1), said module (50) being associated with an invited user, comprising:
- a first communication submodule (500) arranged to communicate with a social network (2), in particular arranged to receive, from the social network (2), an offer of shared access to the host network (1) intended for the invited user, said users being connected via the social network (2) ;
- a first sending/receiving submodule (502) arranged to receive, from the invited terminal (11), a request to access the host network (1), and send configuration information to said invited terminal (11);
- a second sending/receiving submodule (504) arranged to receive, from a second network access management module (40) associated with the host user, a request to identify the invited terminal (11), to send, to said second module (40), information identifying said invited terminal (11), and to receive, from said second module, configuration information comprising an access configuration and authentication parameters, generated on the basis of the identification information and a random number generator function, said authentication parameters, comprising an identifier of the host network and a host network access key which are specific to the invited terminal, allowing the invited terminal (11) to access the host network (1), the invited terminal (11) having previously been identified by the second management module (40) via the identification information sent.

10. System (20) for configuring access to a host network (1), said system (20) comprising:
- a network access management module (40) according to Claim 8;
- a network access management module (50) according to Claim 9;
- a social network (2).

11. Program for a network access management module (40, 50), comprising program code instructions intended to control the execution of the steps of the method according to one of Claims 1 to 7, when said program is run by said module (40, 50).

12. Storage medium that can be read by a module (40, 50) on which the program according to Claim 11 is stored.
